# EUROPEAN PATENT APPLICATION

(11) **EP 4 836 411 A1**
(43) Date of publication of application: **04.11.2026**
(21) Application number: 25315140.1
(22) Date of filing: 28.04.2025
(51) Int. Cl.: H04N 19/52, H04N 19/593

(54) **METHOD AND APPARATUS FOR BLOCK VECTOR CODING A BLOCK OF A PICTURE USING A BLOCK VECTOR OBTAINED FROM A MERGE CODED NEIGHBORING BLOCK**

(71) Applicant: Beijing Xiaomi Mobile Software Co., Ltd., Beijing Beijing 100085 (CN)
(72) Inventor: Plowman, Frank, Beijing, 100085 (CN); Ghaznavi Youvalari, Ramin, Beijing, 100085 (CN); Abdoli, Mohsen, Beijing, 100085 (CN); Tissier, Alexandre, Beijing, 100085 (CN)
(74) Representative: Zimmermann, Tankred Klaus

(57) **Abstract**

A method of coding one or more blocks of a picture is described. The method includes coding a current block of the picture using a merge-based intra prediction process, wherein the coding includes determining at least one virtual block vector (BV) from the current block to a merge reference block of the current block, or coding a current block of the picture using a block vector (BV) based intra prediction process, wherein the coding uses at least one virtual BV of at least one neighboring block of the current block, the neighboring block coded by a merge-based intra prediction process, and the virtual BV being a vector from the neighboring block to a merge reference block of the neighboring block.

## Description

### Technical Field

The present disclosure generally relates to the field of encoding/decoding pictures, images or videos, and embodiments of the present disclosure concern improvements for coding a block of a picture using a block vector (BV) based intra prediction process. More specific embodiments of the present disclosure relate to methods and apparatus obtaining from a merge coded neighboring block a block vector to be used for block vector coding a block of a picture, and/or to methods and apparatus for block vector coding a block of a picture using a block vector obtained from a merge coded neighboring block.

### Background

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For processing a picture, an image or a video, e.g., when encoding and/or decoding the picture, the image or the video, a state-of-the-art block vector (BV) based intra prediction process operates on the basis of BVs obtained from neighboring blocks, which are also BV coded blocks, which are obtained from one or more history lists.

Thus, there is a need to provide further improvements for processing a picture, an image or a video, e.g., when BV encoding and/or BV decoding the picture, the image or the video.

### Summary

The present invention provides a method of coding one or more blocks of a picture, the method comprising:
coding a current block of the picture using a merge-based intra prediction process, wherein the coding includes determining at least one virtual block vector (BV) from the current block to a merge reference block of the current block, or
coding a current block of the picture using a block vector (BV) based intra prediction process, wherein the coding uses at least one virtual BV of at least one neighboring block of the current block, the neighboring block coded by a merge-based intra prediction process, and the virtual BV being a vector from the neighboring block to a merge reference block of the neighboring block.

In accordance with embodiments,
the current block and/or the neighboring block coded using a merge-based intra prediction process is a merge-based block,
the merge-based intra prediction process predicts samples for the merge-based block using information inherited from the merge reference block, the merge reference block being a previously-decoded block of the picture, and
the at least one virtual BV is obtained from a difference between a position of the merge-based block and the merge reference block, e.g. by constructing at least one virtual BV using the coordinates of corresponding positions in the current block and the merge reference block.

In accordance with embodiments, one virtual BV is determined, when
- the merge-based block and the merge reference block have the same size, and/or
- the merge-based block has one merge reference block candidate.

In accordance with embodiments, one virtual BV is determined for
- a predefined reference position of the merge-based block, which has a size different from the merge reference block, and/or
- one merge reference block candidate determined from a plurality of merge reference block candidates.

In accordance with embodiments, the one virtual BV is
- a virtual BV having a minimum amplitude among a plurality of virtual BVs for different reference positions in the merge-based block or for different merge reference block candidates, or
- an average of a plurality of virtual BVs for different reference positions in the merge-based block or for different merge reference block candidates.

In accordance with embodiments, two or more virtual BVs are determined, when
- the merge-based block and the merge reference block are of different size, wherein two or more different virtual BVs are determined for two or more different reference positions in the merge-based block, and/or
- the merge-based block has two or more merge reference block candidates, wherein a virtual BV is determined for each of the merge reference block candidates.

In accordance with embodiments, when coding the current block using the merge-based intra prediction process, the at least one virtual BVs is added to coded block information and/or a list of BVs, like a history buffer, e.g., for use for a history-based BV derivation.

In accordance with embodiments, the at least one virtual BV is used for coding
- the current block in a different channel, e.g., a co-located chroma block, or
- one or more subsequent blocks in a currently processed picture or frame, or
- one or more blocks in a different picture or frame, e.g., one more pictures or frames following the currently processed picture or frame.

In accordance with embodiments, the one or more virtual BVs to be used by the BV-based intra prediction process are
- determined from the one or more neighboring blocks, which are coded using a merge-based intra prediction process, and/or
- obtained from a list of BVs.

In accordance with embodiments, the list of BVs, e.g., a first-in-first-out (FIFO) buffer, holds the N most recently BVs used for the coding process.

In accordance with embodiments, for coding the current block using the BV-based intra prediction process, a neighborhood of the current block is searched for locating BVs for the BV-based intra prediction process, and, in case a neighboring block is encountered, which is coded using a merge-based intra prediction process, one or more the virtual BVs are used for the BV-based intra prediction process.

In accordance with embodiments, coding the blocks of a picture comprises decoding the blocks as follows:
- when decoding a block coded using a merge-based intra prediction process,
   ∘ a virtual BV is derived, and
   ∘ the virtual BV is stored in coded block information and/or added to a list of BVs, like a history buffer,
- when decoding a block coded using a BV-based intra prediction process,
   ∘ a neighborhood search is performed,
   ∘ in case the neighborhood search reveals a block which is coded using the merge-based intra prediction process, the virtual BV is retrieved from the coded block information or from the list of BVs, and
   ∘ the block is decoded using the BV-based intra prediction process and the retrieved virtual BV.

In accordance with embodiments, coding the blocks of a picture comprises decoding the blocks as follows:
- when decoding a block coded by a BV-based intra prediction process using a cross-component model, and when a collocated luma block is coded using a merge-based intra prediction process,
   ∘ a virtual BV is derived for each of a plurality of merge reference block candidates for the merge-based intra prediction process, and
   ∘ the block is decoded by the BV-based intra prediction process using a cross-component model derived using the merge reference blocks of the virtual BVs.

The present invention provides a non-transitory computer-readable storage medium comprising instructions which, when executed by a computer, cause the computer to carry out the inventive method.

The present invention provides an apparatus of coding one or more blocks of a picture, the apparatus comprising:
a processing module, wherein the processing module is configured to code
- a current block of the picture using a merge-based intra prediction process, wherein the coding includes determining at least one virtual block vector (BV) from the current block to a merge reference block of the current block, or
- a current block of the picture using a block vector (BV) based intra prediction process, wherein the coding uses at least one virtual BV of at least one neighboring block of the current block, the neighboring block coded by a merge-based intra prediction process, and the virtual BV being a vector from the neighboring block to a merge reference block of the neighboring block.

The technical solutions provided according to embodiments of the present disclosure have the following beneficial effects.

A state-of-the-art block vector (BV) coding of blocks may encounter a situation with few or no blocks in its neighborhood which are coded using a BV-based prediction process so that searching the neighborhood yields few or no neighborhood block vectors so that less effective are used for producing one or more block vectors.

Embodiments of the present disclosure address the above shortcomings in the prior art by using or obtaining one or more BVs created from a neighboring block that is coded using a merge-based intra mode process.

The present disclosure is advantageous because it facilitates the construction of better neighborhood vectors, especially in situations in which no or only few BV coded neighboring blocks are present, thereby providing a better coding efficiency.

It is to be understood that the content described in this section is not intended to identify key or critical features of the embodiment of the present disclosure, nor is it intended to limit the scope of the present disclosure. Other features of the present disclosure become readily apparent from the following description.

### Brief Description of the Drawings

The drawings are explanatory and serve to explain the present disclosure, and are not to be construed to limit the present disclosure to the illustrated embodiments.
- Fig. 1: is a block diagram of a conventional video encoder,
- Fig. 2: is a block diagram of a conventional video decoder,
- Fig. 3: illustrates a BV-based prediction method or process,
- Fig. 4: illustrates a process for deriving a BV from a neighborhood of a current block CU,
- Fig. 5: illustrate an intra template matching search area for the Intra template matching prediction (IntraTMP) mode;
- Fig. 6: illustrates an example of an IntraTMP-AR-BVP construction,
- Fig. 7: illustrates the five positions in a reference block,
- Fig. 8: illustrates luma blocks used to derive a direct block vector,
- Fig. 9: illustrates the reference area in a block vector-guided convolutional cross-component model (BVG-CCCM) method,
- Fig. 10: illustrates template-based intra mode derivation (TIMD) templates for a cost calculation or determination,
- Fig. 11: illustrates three EIP filter shapes,
- Fig. 12(A)-Fig. 12(C): illustrates three types of reconstructed areas for an EIP filter,
- Fig. 13: illustrates a merge-based intra prediction,
- Fig. 14: illustrates non-adjacent spatial neighboring blocks that are used in a TIMD merge list generation;
- Fig. 15(A): illustrates a flow diagram of a method of codding one or more blocks of a picture in accordance with embodiments of the present disclosure,
- Fig. 15(B): illustrates a flow diagram of a method of coding one or more blocks of a picture in accordance with further embodiments of the present disclosure,
- Fig. 16: illustrates the virtual BV concept in accordance with embodiments of the present disclosure,
- Fig. 17: illustrates a flowchart showing how a virtual BVs may be used in accordance with embodiments of the present invention,
- Fig. 18: illustrates a flow diagram of a method for decoding an encoded data stream in accordance with embodiments of the present disclosure,
- Fig. 19: illustrates a flow diagram of a method for encoding a picture into an encoded data stream in accordance with embodiments of the present disclosure,
- Fig. 20(A): illustrates a block diagram of an apparatus of coding one or more blocks of a picture in accordance with embodiments of the present disclosure,
- Fig. 20(B): illustrates a block diagram of an apparatus of coding one or more blocks of a picture in accordance with further embodiments of the present disclosure,
- Fig. 21: illustrates a block diagram of a decoder for decoding an encoded data stream in accordance with embodiments of the present disclosure,
- Fig. 22: illustrates a block diagram of an encoder for encoding a picture into an encoded data stream in accordance with embodiments of the present disclosure,
- Fig. 23: illustrates a data stream in accordance with embodiments of the present disclosure, and
- Fig. 24: illustrates a block diagram illustrating an electronic device according to embodiments of the present disclosure.

### Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein may be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if", "when", "in case", "responsive to" may be used interchangeably.

### Standard Video Coder

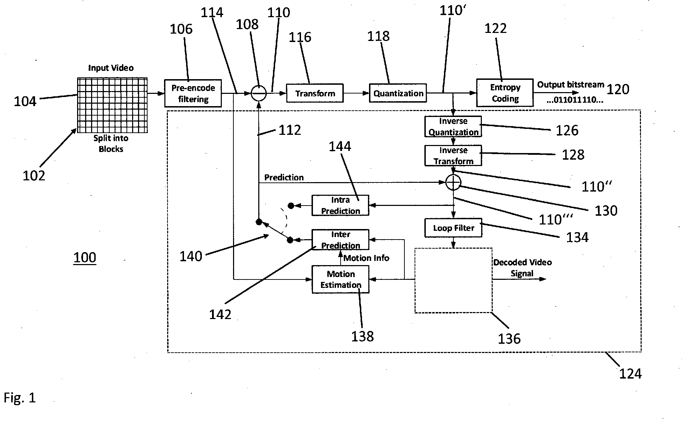

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated or determined, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

### Standard Video Decoder

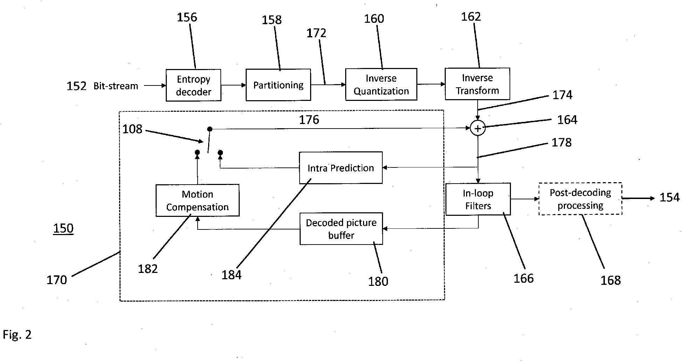

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

### Description of tools in VVC and Enhanced Compression Model (ECM)

In the following a brief description of certain ECM and VVC/VTM tools, which are described in more detail in the JVET-AG2025 and JVET-T2002 documents.

### Block Vector-based Prediction Methods

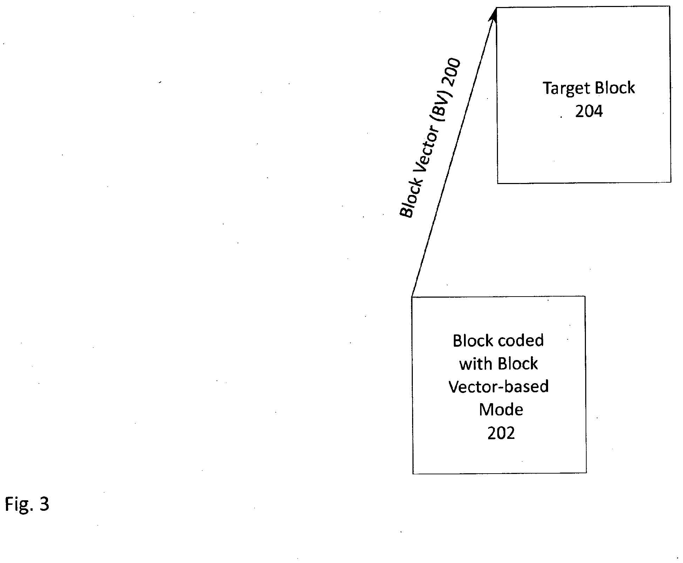

Fig. 3 illustrates a BV-based prediction method or process. The block vector-based prediction method or process uses one or more block vectors (BVs) in order to make a prediction. These BVs 200 point from one region 202 of the image to another region 204, the so-called target block, of the same image. The quality of a BV prediction is generally dependent on a similarity between the block predicted using a BV-based technique and the target block. The BVs 200 are generally constructed such that the target block 204 lies within a part of the same image which has already been reconstructed, and the samples of which may therefore be used to produce a prediction for the current block. Most often, as in intra block copy (IBC) and a in Intra template matching (IntraTMP), the prediction is made by copying the reconstructed samples from the target block 204, in certain circumstances with additional operations performed. Some BV-based prediction methods may be more sophisticated, however. For example, BV-guided methods, such as a block vector-guided convolutional cross-component model (BVG-CCCM), use the reconstructed target block samples to derive a model which is then used to predict the current block.

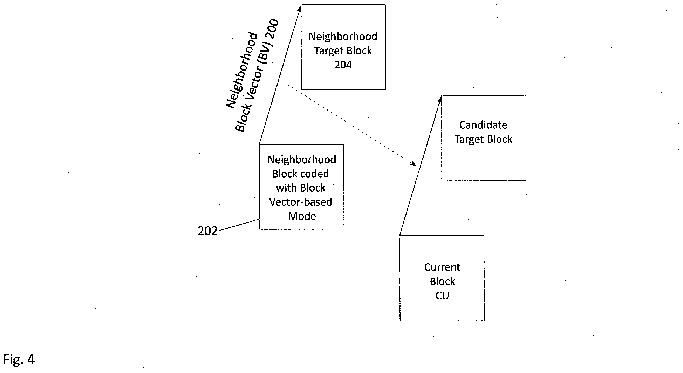

BV-based prediction methods may use specific processes to derive their BVs. A naïve or simple signaling of the BVs may result in an excessive bitrate. Therefore, BV-based prediction techniques provide succinct means to signal the BV(s) they use, or derive the BVs implicitly. This may involve a searching of a neighborhood of a currently processed block for other blocks which are also coded using BV-based prediction methods (also referred to herein as BV coded blocks) and using the BVs that these blocks used as predictors for the current block. The rationale behind this is that good BVs tend to be spatially correlated, thus a neighbor's vector may also be a good vector for the current block. Fig. 4 illustrates a process for deriving a BV from a neighborhood of a current block CU. When the current block CU is coded using a BV-based prediction technique, its neighborhood is searched. When a neighboring block 202 is found, which is coded using a BV-based technique, the BV 200 used by that neighbor 202 may also represent a good BV for the current block. Block-vector based prediction methods may use these neighborhood vectors 200 in a variety of ways, dependent on the specifics of the particular method. For example, the neighborhood vectors may be refined or put in competition with one another.

### Intra Block Copy (IBC)

One example of a BV-based intra prediction method is intra block copy (IBC): a tool adopted in HEVC Screen Content Coding Extension (SCC) which significantly improves the coding efficiency of screen content materials. Since the IBC mode is implemented as a block level coding mode, block matching (BM) is performed at the encoder to find an optimal block vector (or motion vector) for each CU. Here, a block vector is used to indicate the displacement from the current block to a reference block, which is already reconstructed inside the current picture. The luma block vector of an IBC-coded CU is in quarter-pel precision. The chroma block vector rounds to integer precision as well. When combined with adaptive motion vector resolution (AMVR), the IBC mode may switch between 1-pel and 4-pel motion vector precisions. An IBC-coded CU is treated as a third prediction mode other than intra or inter prediction modes. The IBC mode is applicable to CUs with both width and height smaller than or equal to 64 luma samples.

In a block matching search, the search range is set to cover both the previous and current CTUs. At a CU level, the IBC mode is signaled with a flag and it may be signaled as an IBC advanced motion vector prediction (AMVP) mode or as an IBC skip/merge mode as follows:
- *IBC skip*/*merge mode*: a merge candidate index is used to indicate which of the block vectors in the a from neighboring candidate IBC coded blocks is used to predict the current block. The merge list consists of spatial, history-based motion vector prediction (HMVP), and pairwise candidates,
- *IBC AMVP mode*: a block vector difference is coded in the same way as a motion vector difference. The block vector prediction method uses two candidates as predictors, one from a left neighbor and one from an above neighbor (if IBC coded). When either neighbor is not available, a default block vector is used as a predictor. A flag is signaled to indicate the block vector predictor index.

The history-based MVP (HMVP) merge candidates are added to a merge list after the spatial motion vector prediction (MVP) candidates. In this method, the block vector of a previously coded block is stored in a table and used as a MVP for the current CU. The table with multiple HMVP candidates is maintained during the encoding/decoding process. The table is reset (emptied) when a new CTU row is encountered. Whenever there is a non-subblock IBC-coded CU, the associated motion information is added to the last entry of the table as a new HMVP candidate.

The HMVP table size S is set to be 6, which indicates that up to 5 History-based MVP (HMVP) candidates may be added to the table. When inserting a new motion candidate to the table, a constrained first-in-first-out (FIFO) rule is utilized, wherein a redundancy check is firstly applied to find whether there is an identical HMVP in the table. If found, the identical HMVP is removed from the table and all the HMVP candidates afterwards are moved forward, and the identical HMVP is inserted as the last entry of the table.

HMVP candidates may be used in the merge candidate list construction process. The latest several HMVP candidates in the table are checked in order and inserted to the candidate list after the temporal motion vector prediction (TMVP) candidate. A redundancy check is applied on the HMVP candidates to the spatial or temporal merge candidate.

To reduce the number of redundancy check operations, the following simplifications are introduced:
(1) The last two entries in the table are redundancy checked to A₁ and B₁ spatial candidates, respectively.
(2) Once the total number of available merge candidates reaches the maximum allowed merge candidates minus 1, the merge candidate list construction process from HMVP is terminated.

### Intra template matching (IntraTMP)

Another example of a BV-based intra prediction method is intra template matching prediction (IntraTMP). IntraTMP copies the best prediction block from the reconstructed part of the current frame, whose L-shaped template matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

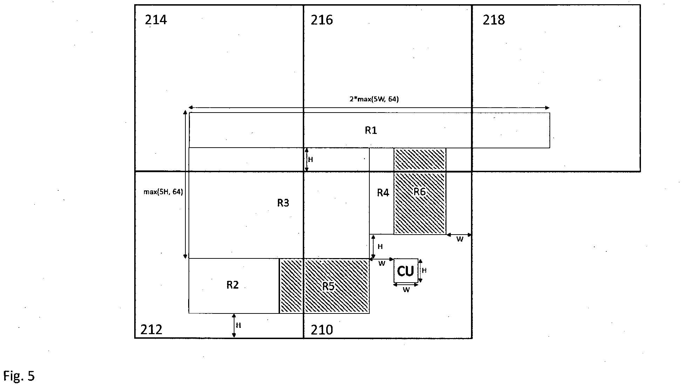

The prediction signal is generated by matching the L-shaped, Top-only or Left-Only causal neighbor of the current block with another block in a predefined search area illustrated in Fig. 5. There are 6 predefined search areas, i.e., R1 to R6 in Fig. 5 which contain the reconstructed samples from the top CTUs 214 to 218 and the left CTU 212 as well as part of the reconstructed samples within the current CTU 210 that are located above, left, bottom-left and top-right to the current block CU.

IntraTMP employs an implicit merge mode, where merge candidates are considered without signaling a merge flag or index. Specifically, the reference positions pointed by the block vectors of all the adjacent and non-adjacent merge candidates (coded in IntraTMP or IBC mode) are used as additional candidates beyond the default search areas, and up to 10 merge candidates are derived from the neighboring prediction units (PUs) and by prioritizing the candidates outside the IntraTMP search range. In addition, up to 20 auto-relocated block vector prediction (AR-BVP) candidates are constructed to get more reference positions.

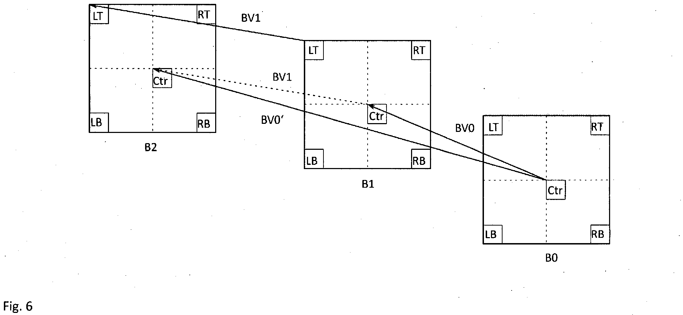

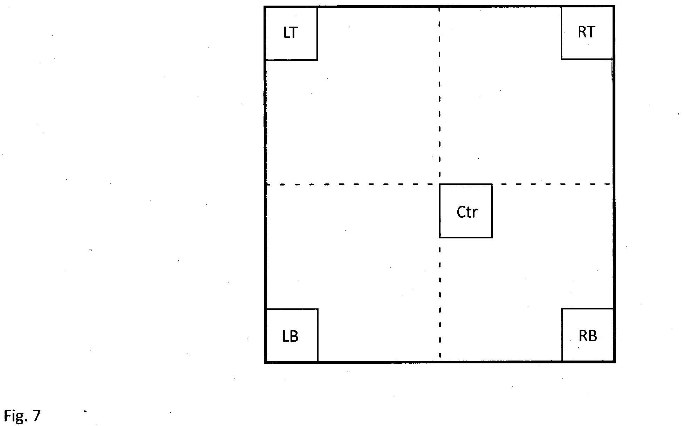

Fig. 6 illustrates an example of an IntraTMP-AR-BVP construction, and Fig. 7 illustrates the five positions in a reference block. As is shown in Fig. 6, a guiding block vector BV0 (i.e., an existing BVP already in the candidate list) associated with the current block B0 points at a reference block B1. If B1 has a BV denoted as BV1 pointing at a reference block B2, then BV0', given by BV0' = BV0 + BV1, is defined as the AR-BVP. BV1 itself may also be directly used as AR-BVP to get more available candidates. When deriving AR-BVP, all five positions including the top-left (e.g., LT in Fig. 7), the top-right (e.g., RT in Fig. 7), the center (e.g., Ctr in Fig. 7), the bottom-left (e.g., LB in Fig. 7), and the bottom-right (e.g., RB in Fig. 7) positions of the reference block are checked to find the reference block's BVs. Both the merge candidates from the neighboring PUs and the constructed AR-BVPs may be used as guiding BVs. The construction is recursively processed until the number of AR-BVPs reaches 20 or no new AR-BVPs are constructed.

Finally, up to 20 AR-BVPs may be constructed and there may be up to 30 merge candidates in total. If an AR-BVP candidate is selected for refinement, it may have a refinement range of 3x3.

The same template matching cost is used to compare the merge positions and the defaults ones. For a bi-directional IBC merge candidate, two candidates are retained corresponding to each reference frame. Similarly, for IntraTMP, two candidates are considered corresponding to the best candidate by template search and the coded candidate.

For each block vector obtained by default search, merge or ARBVP, a refinement window of 3x3 is defined. For overlapping block vectors, a clustering process is defined. If two refinement windows overlap, the BV candidate with the lower template cost is selected and ranked in the list for further refinement. Subsequently, a new refinement window that comprises both individual refinement windows is determined for the winning candidate. Additionally, the following considered:
- For block sizes of 8x8 or smaller, a search region fully overlapped by a BVP candidate refinement window is skipped.
- In each sparse region, the searching pattern is shifted by one sample per row in order to increase the candidate diversity.

A sum of absolute differences (SAD) may be used as a cost function.

### Direct Block Vector

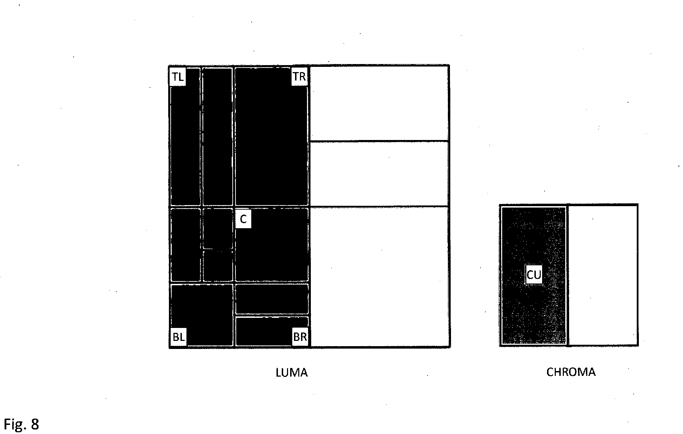

Yet another example of a BV-based intra prediction tool is a direct block vector process. The direct block vector is used for chroma blocks. A flag is signaled to indicate whether a chroma block is coded using IBC mode. Fig. 8 illustrates luma blocks used to derive a direct block vector. If one of the luma blocks at the five locations shown in Fig. 8 is coded with IBC or intraTMP mode, its block vector is scaled and is used as a block vector for the chroma block. Template matching may be used to perform block vector scaling.

### BVG-CCCM

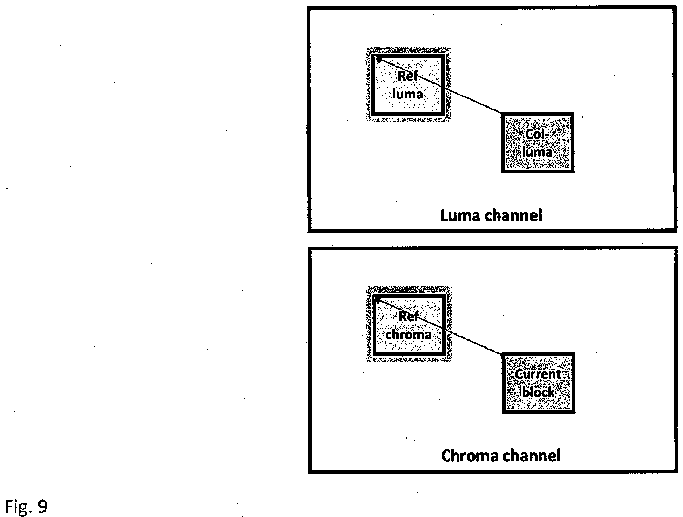

A further example of a BV-based intra prediction method is the block vector-guided convolutional cross-component model (BVG-CCCM). When the co-located luma prediction is coded with IBC or IntraTMP in Intra slices, the BVG-CCCM mode may be used. In this mode, the block vectors of the co-located luma blocks, coded in IBC or intraTMP modes, are used to determine the reference area for calculating the CCCM parameters. The prediction is performed using the calculated model parameters and co-located luma samples. Fig. 9 illustrates the reference area in the BVG-CCCM method.

The BVG-CCCM mode uses an 11-tap filter for cross-component prediction as below: predChromaVal = c0C + c1N + c2S + c3E + c4W + c5P(C) + c6P(N) + c7P(S) + c8P(W) + c9P(E)+ c10B

The input to the spatial 5-tap component of the filter consists of a center (C) luma sample which is collocated with the chroma sample to be predicted and its above/north (N), below/south (S), left/west (W) and right/east (E) neighbors.

The nonlinear term P is represented as a power of two of the corresponding luma sample and B is the bias term.

Similar to the direct block vector mode, five locations in the collocated luma block area are scanned and the associated block vectors are then used for determining the reference area for parameter calculation in BVG-CCCM method.

### Template-based intra mode derivation (TIMD)

For each intra prediction mode in the MPMs, as well as the wide-angle modes if the above-right and/or bottom-left reference samples are available, the SATD between the prediction and reconstruction samples of the template is obtained. First two intra prediction modes with the minimum SATD and one non-angular intra prediction mode (i.e., DC or Planar) with the lowest SATD cost are selected as the TIMD modes. These three TIMD modes are fused with the weights after applying the Position dependent intra prediction combination (PDPC) process, and such weighted intra prediction are used to code the current CU. The PDPC is included in the derivation of the TIMD modes.

The conditions below are checked to determine whether the non-angular intra prediction mode is used in fusion:
- The non-angular intra prediction mode is different from the two selected intra prediction modes.
- costMode3 < 1.5*costModel, where the costMode3 is the SATD cost of the non-angular intra prediction mode and costMode1 is the SATD cost of the first intra prediction mode.

If both of the conditions are true, three intra prediction modes are used to generate the prediction. And the weights of each intra prediction mode are computed from SATD cost: ${weight}_{i} = \frac{sumSATD - {costMode}_{i}}{2 \times sumSATD} , sumSATD = {\sum }_{j = 1}^{3} {costMode}_{i} .$ Otherwise, the non-angular intra prediction mode is not used in the prediction.

The costs of the two selected modes are compared with a threshold, and the cost factor of 2 may be applied as follows: $costMode 2 < 2 * costMode 1 .$ If this condition is true, the fusion is applied, otherwise only mode1 is used.

The weights of the modes are computed from their SATD costs as follows: $weight 1 = costMode 2 / \left(costMode1+codeMode2\right)$ $weight 2 = 1 - weight 1$

The division operations are conducted using the same lookup table (LUT) based integerization scheme used by the Cross-Component Linear Model (CCLM).

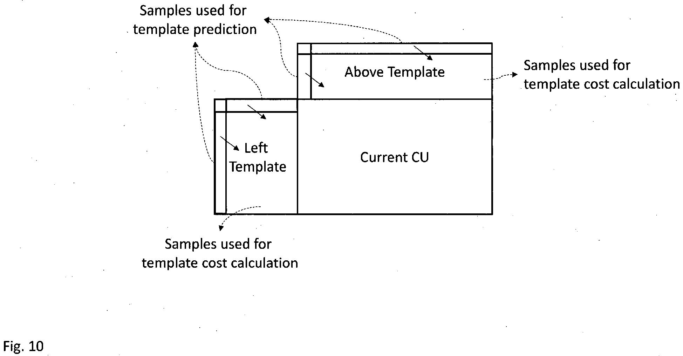

Besides, a location-dependent sample-based fusion used in a decoder side intra mode derivation (DIMD) fusion process is used for the TIMD fusion but the location-dependent criterion applying to amplitudes of the selected predictors is replaced by a SATD cost-based criteria. The location-dependent criterion is determined from a ratio of the normalized SATD of the selected TIMD predictors computed in above and left template area shown in Fig. 10 illustrating the TIMD templates for the cost determination or calculation.

In an ECM encoder, the combination of TIMD and intra sub-block partition (ISP) (TIMD-ISP) and the combination of TIMD and multiple reference line (MRL) (TIMD-MRL) are disabled.

### Extrapolation filter-based intra prediction (EIP)

In the EIP mode, the samples in a CU are predicted from the top-left position to the bottom-right position by applying an extrapolation filter to neighboring reconstructed samples or predicted samples. The EIP mode uses a 15-tap filter for prediction as below: ${pred}_{\left(x, y\right)} = {\sum }_{i = 0}^{13} \left({c}_{i}\times {t}_{\left(x-{offsetX}_{i},y-{offsetY}_{i}\right)}\right) + {c}_{14} \times {2}^{bitdepth - 1}$ where *pred*_{(*x,y*)} is the predicted value at position (x, y) in the CU, *cᵢ* is the filter coefficient, and *t*_{(*x-offsetX*ᵢ*,y-offsetY*ᵢ}) is the reconstructed samples or predicted samples. Predicted sample values are clipped to the range of the reference samples instead of the full sample value range. Reference sample area used for determining the range is the same that is used when generating the filter coefficients.

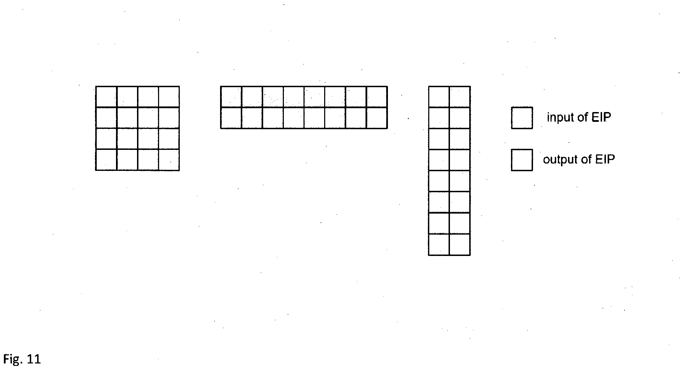

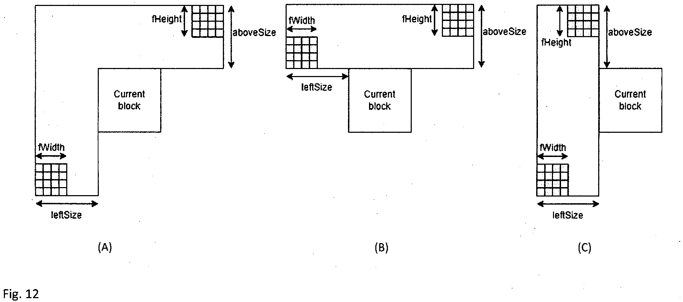

The EIP filter may be derived from the neighboring reconstructed samples or may be inherited from the previous EIP coded blocks. There are three EIP filter shapes and three types of reconstructed area supported in ECM as shown in Fig. 11 illustrating the three EIP filter shapes, and in Fig. 12(A) to Fig. 12(C) illustrating the three types of reconstructed areas for the EIP filter.

For a CU coded in the EIP mode, an EIP merge flag is signaled to indicate whether the EIP filter is inherited from previous blocks coded in EIP mode. The behaviour when the merge flag is true is described in more detail later in the section "EIP-Merge".

When the EIP merge flag is false, the EIP filter is derived from the neighboring reconstructed samples and the relevant syntax element is signaled to indicate which one of the three types of reconstructed area and which one of the three filter shapes are used for the CU. The selected filter moves in the selected reconstructed area either horizontally or vertically with a one-pixel step to construct the auto-correlation matrix and the cross-correlation vector. The calculation of coefficients from the auto-correlation matrix and the cross-correlation vector is similar to that of CCCM with added L-2 regularization. The coefficients are computed as $\hat{β} = {\left({A}^{T}⋅A+λI\right)}^{- 1} {A}^{T} y .$ where *λ* is the regularization parameters. A L2-regularization is achieved by a diagonal matrix *λ***I** being added to the 'ATA' matrix.

A subset of the coefficients can be relaxed (unregularized). In this case, when the ith coefficient is relaxed, the (ith row, ith column) entry of the diagonal matrix *λ***I** is set to zero. In regularized EIP scheme:
- *λ = M* · *p_{EIP},* where *p_{EIP}* = 15 is the number of filter taps in EIP.
   ∘ M = 192V *nSamples* ≤ 2024, and thus *λ* = 2880.
   ∘ *M* = 128 otherwise, and thus *λ* = 1920.
- The bias term of EIP is relaxed (unregularized): the bottom-right entry of the diagonal matrix is set to zero.

After generating the prediction samples of the CU using the EIP filter, an intra prediction mode is derived by applying the DIMD process to the prediction samples. Specifically, a horizontal gradient and a vertical gradient are calculated for each predicted sample to build a histogram of gradient. Then the intra prediction mode corresponding to the largest histogram count is used to determine a low-frequency non-separable secondary transform (LFNST), a non-separable primary transform (NSPT) or a multi transform selection (MTS) transform set.

### Merge-based Intra Prediction Methods

Merge-based intra prediction methods inherit information from a nearby block (referred to in this disclosure as the merge reference block) in order to predict the current block. The inherited information in merge-based prediction methods refer to the intra prediction information that are required for the intra prediction process of a block, for example intra prediction modes, fusion weights, interpolation filter parameters, etc. Some BV-based prediction methods may incorporate merge-based aspects, such as IBC and IntraTMP. In this disclosure, a merge-based intra prediction refers to tools that do not use a BV-based prediction mechanism or the BV-based prediction mechanism is not the main aspect of the method.

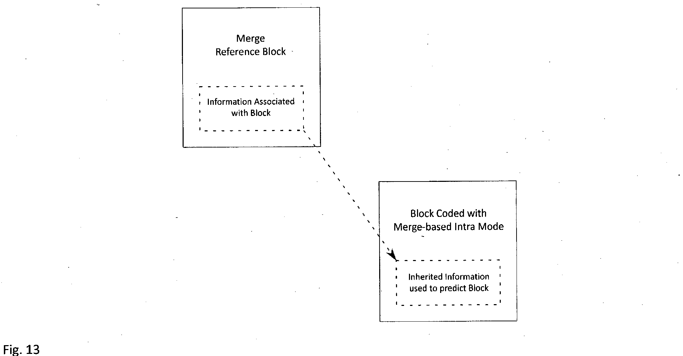

Fig. 13 illustrates the merge-based intra prediction, and the information, which is inherited, and how it is used depends on the specific merge-based intra prediction method in question. Prominent examples in ECM include the TIMD-merge, which inherits information including up to 3 intra prediction modes and corresponding weights, and the EIP-merge, which inherits an EIP model. The procedure, which a merge-based intra prediction technique uses to determine which block is to be used for the merge reference block, may vary and may be entirely implicit or may involve explicitly signalled information, for example an index into a merge candidate list.

The procedure used to determine the merge reference block may also vary between different merge-based intra prediction methods.

### TIMD-Merge

One example of a merge-based intra prediction method is TIMD-Merge. A block coded using TIMD-Merge inherits the TIMD modes from the previously TIMD coded blocks. Adjacent and non-adjacent spatial neighboring blocks are scanned and if the scanned block is coded in TIMD or TIMD-merge mode, then its TIMD information (prediction modes, fusion flag, fusion weights and wide-angle conditions of TIMD modes, MTS transform types) are added to a TIMD-merge list. Up to five TIMD candidates are added into the initial list.

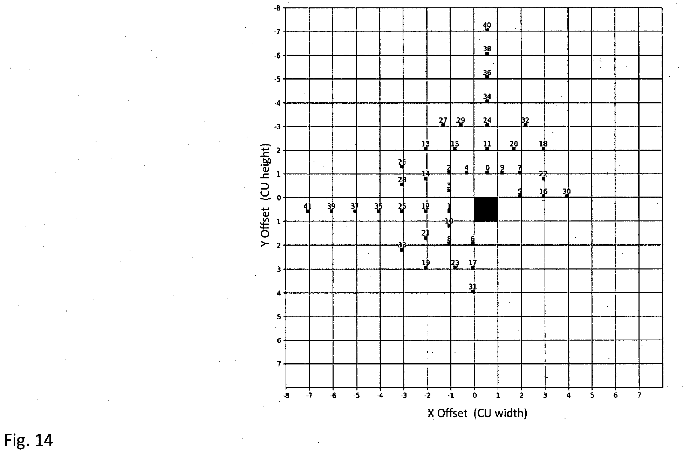

Fig. 14 illustrates non-adjacent spatial neighboring blocks that are used in TIMD merge list generation. An initial list of five TIMD candidates, e.g., the initial TIMD merge list shown below, is created from the neighborhood.

| **Cand** | **Intra modes** | **Fusion weights** |
|---|---|---|
| 1 | (IPM_{1,1}, IPM_{1,2}, IPM_{1,3}) | (W_{1,1}, W_{1,2}, W_{1,3}) |
| 2 | (IPM_{2,1}, IPM_{2,2}, IPM_{2,3}) | (W_{2,1}, W_{2,2}, W_{2,3}) |
| · · · | · · · | · · · |
| 5 | (IPM_{5,1}, IPM_{5,2}, IPM_{5,3}) | (W_{5,1}, W_{5,2}, W_{5,3}) |

After forming the TIMD merge list, the merge candidates are sorted based on the SATD cost over the template of the current block. For the cost calculation, the SATD cost of the primary IPM of each TIMD candidate is used. The template size for sorting of TIMD merge candidates is one line from the immediate neighbourhood of the block.

The TIMD merge mode is applied to only luma blocks. Moreover, the mode is disabled for 4x4 block sizes.

### Cross-Component Prediction (CCP) merge

Another example of a merge-based intra prediction method is a cross-component prediction (CCP)-merge. For chroma coding, a flag is signaled to indicate whether CCP mode (including the CCLM, CCCM, generalized linear model (GLM) and their variants) or non-CCP mode (conventional chroma intra prediction mode, fusion of chroma intra prediction mode) is used. If the CCP mode is selected, one more flag is signaled to indicate how to derive the CCP type and parameters, i.e., either from a CCP merge list or signaled/derived on-the-fly. A CCP merge candidate list is constructed from the spatial adjacent, temporal, spatial non-adjacent, history-based m or shifted temporal candidates. After including these candidates, default models are further included to fill the remaining empty positions in the merge list. In order to remove redundant CCP models in the list, pruning operation is applied. After constructing the list, the CCP models in the list are reordered depending on the SATD costs, which are obtained using the neighboring template of the current block. More details are described below.
- Spatial adjacent and non-adjacent candidates
   The positions and inclusion order of the spatial adjacent and non-adjacent candidates are the same as those defined in ECM for regular inter merge prediction candidates.
- Temporal and shifted temporal candidates
   Temporal candidates are selected from the collocated picture. The position and inclusion order of the temporal candidates are the same as those defined in ECM for regular inter merge prediction candidates. The shifted temporal candidates are also selected from the collocated picture. The position of temporal candidates is shifted by a selected motion vector which is derived from motion vectors of neighboring blocks.
- History-based candidates
   A history-based table is maintained to include the recently used CCP models, and the table is reset at the beginning of each CTU row. If the current list is not full after including spatial adjacent and non-adjacent candidates, the CCP models in the history-based table are added into the list.
- Default candidates
   CCLM candidates with default scaling parameters are considered, only when the list is not full after including the spatial adjacent, spatial non-adjacent, or history-based candidates. If the current list has no candidates with the single model CCLM mode, the default scaling parameters are {0, 1/8, -1/8, 2/8, -2/8, 3/8, -3/8, 4/8, -4/8, 5/8, - 5/8, 6/8}. Otherwise, the default scaling parameters are {0, the scaling parameter of the first CCLM candidate + {1/8, -1/8, 2/8, -2/8, 3/8, -3/8, 4/8, -4/8, 5/8, -5/8, 6/8}.

It is noted that the LB-CCP flag is inherited from a CCP candidate in the CCP merge candidate list.

A flag is signaled to indicate whether the CCP merge mode is applied or not. If CCP merge mode is applied, an index is signaled to indicate which candidate model is used by the current block. In addition, CCP merge mode is not allowed for the current chroma coding block when the current CU is coded by intra sub-partitions (ISP) with single tree, or the current chroma coding block size is less than or equal to 16. For a CCP merge coded block, one CCP-merge fusion flag is further signaled to indicate whether a fusion mode is applied. In the fusion mode, the final prediction is generated by a weighted sum of the CCP-merge prediction and either the MM-CCCM prediction or the DIMD prediction. A CCP-merge fusion type flag is further signaled if the CCP-merge fusion flag is true, to indicate whether the MM-CCCM prediction or the DIMD prediction is selected and fused with the CCP-merge prediction.

### EIP-Merge

Yet another example of a merge-based intra prediction method is the above mentioned EIP-merge. As mentioned above, an EIP merge flag is signaled for each EIP CU. When the EIP merge flag is true, an EIP merge list is constructed from the spatial adjacent, spatial non-adjacent, temporal and history candidates. The position and inclusion order of these candidates are the same as those used in CCP merge candidate list. An EIP merge index is further signaled to indicate which EIP merge candidate is selected. The filter shape and the filter coefficients of the selected candidate are then inherited to code the CU.

### Disadvantages of Prior art Approaches

In some circumstances or scenarios, there may be only few or no blocks coded using BV-based prediction methods in a neighborhood of a particular block intended to be coded using a BV-based method. Searching the neighborhood of such blocks yields no or only few neighborhood vectors. In such scenarios, BV-based prediction methods turn to less effective methods for producing vectors for these blocks, such as hard-coded default vectors. The ineffectiveness of these BVs result in requiring many bits to code such blocks using BV-based prediction, even if the blocks may, in principle, be accurately predicted using BV-based prediction. These bits result from having to signal a large vector offset to a better vector, or from having to signal a high-energy residual due to an inaccurate prediction.

### Invention Approach

For addressing the drawbacks encountered in prior art approaches, the present disclosure teaches to make use of a BV, referred to herein as a virtual block vector (virtual BV) that is obtained from a block that is coded using a merge-based intra mode process. It has been found that in the scenarios described above, BV blocks, for which no or only few BVs are found, may be accurately predicted using the virtual BV(s) for the BV-based prediction process. When a block is coded using a merge-based intra mode (also referred to herein as a merge-based block), the virtual block vector is constructed. The virtual BV is defined as a vector from that merge-based block to the block from which it inherited its intra prediction parameters (i.e., the merge reference block). When coding subsequent blocks using BV-based intra prediction process (also referred to herein as a BV-based block), this virtual BV may then be used by BV-based tools in a similar fashion to how a regular BV is used. Stated differently, the concept of using virtual BV(s) addresses the disadvantages encountered in the prior art by providing an alternative source of BVs in the neighborhood, besides blocks which are themselves coded using BV-based prediction. This facilitates the construction of better neighborhood vectors, thus reducing the number of bits required to code blocks using BV-based prediction modes.

Embodiments of the present disclosure pertain to the creation of virtual BVs when coding a block using a merge-based intra prediction process so that they may be used later in the coding process when encountering a block to be coded using a BV-based intra prediction process. Other embodiments pertain to the prior art scenario in which a block is to be coded using a BV-based intra prediction process but no or only few BVs are obtained from a neighborhood. In that scenario, the BV-based intra prediction process relies on the virtual BVs which are determined from neighboring blocks coded using a merge-based intra prediction process, or which are obtained from a list of virtual BVs.

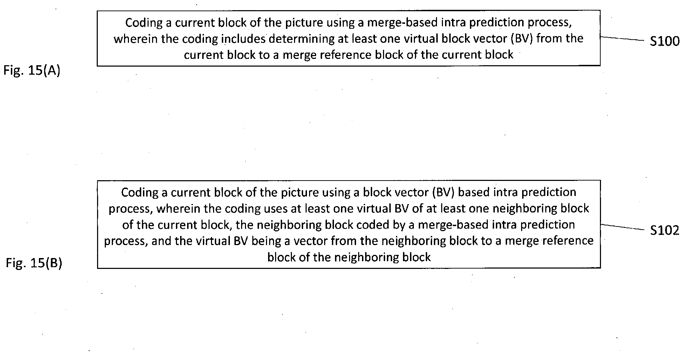

Fig. 15(A) illustrates a flow diagram of an embodiment of a method of coding one or more blocks of a picture. The method includes:
S100: Coding a current block of the picture using a merge-based intra prediction process, wherein the coding includes determining at least one virtual block vector (BV) from the current block to a merge reference block of the current block.

Fig. 15(B) illustrates a flow diagram of a further embodiment of a method of coding one or more blocks of a picture. The method includes:
S102:Coding a current block of the picture using a block vector (BV) based intra prediction process, wherein the coding uses at least one virtual BV of at least one neighboring block of the current block, the neighboring block coded by a merge-based intra prediction process, and the virtual BV being a vector from the neighboring block to a merge reference block of the neighboring block.

In accordance with embodiments, for blocks coded using a merge-based intra prediction mode, a virtual BV is calculated by taking the difference between the position of the intra merge-coded block and the block which it inherited its prediction information from. A block coded using an intra merge mode may have one or more virtual BVs associated with it.

In accordance with embodiments, when searching a neighborhood of a block in order to locate BVs for a BV-based prediction method, if the search encounters a block which is coded using a merge-based intra prediction mode, then one or more of its virtual BVs are used. In accordance with embodiments, for a neighborhood search a construction of the IntraTMP merge list may be modified, which is in turn may be used by IntraTMP, decoder-side intra mode derivation (DIMD), occurrence-based intra coding (OBIC) and spatial geometric partitioning mode (SGPM). Also the construction of an intra block copy (IBC) candidate list may be modified. For example, neighborhood searches operate by gathering information from one or more blocks in the neighborhood. The blocks which will be used are determined according to offsets from the current block. The offsets which will be used are generally pre-defined in what may also be called a neighborhood map. One example of such a map is that used for the IntraTMP merge list. This same map (and therefore the same neighborhood search procedure) is additionally used for the block-vector aspects of DIMD, OBIC and SGPM. IBC uses an alternative map, thus an alternative neighborhood search procedure.

In accordance with embodiments, when coding a block using a merge-based intra prediction method, one or more virtual BVs are derived and added to a history buffer used for history-based BV derivation.

In accordance with embodiments, one or more of virtual BVs of an intra merge-coded block may be used for coding a block in a different channel. For example, a virtual BV of a TIMD-Merge block may be used in a BV-based prediction of a co-located chroma block.

In accordance with embodiments, one or more of virtual BVs of an intra merge-coded block may be used for coding a block in a different frame or picture. For example, a virtual BV of a TIMD-Merge block may be used in a BV-based prediction of another block in a different frame.

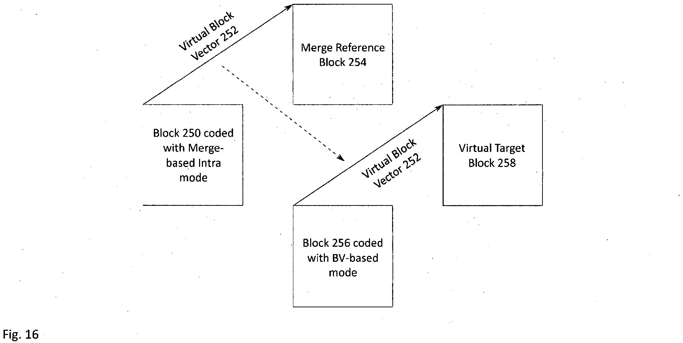

Fig. 16 illustrates the virtual BV concept in accordance with embodiments of the present disclosure, where the virtual BV is obtained from a block coded using a merge-based intra mode process. When a block 250 is coded using a merge-based intra mode, a virtual block vector (virtual BV) 252 is constructed. The virtual BV 252 is defined as the vector from the block 250 to the merge reference block 254 from which block 250 inherited its intra prediction parameters. When coding subsequent blocks, the virtual BV 252 is used by BV-based tools in a similar fashion to how a regular BV would be used. More specifically, a block 256 to be BV coded uses the BV 252 pointing to its virtual target block 258.

### Virtual Block Vector Derivation

Merge-based intra prediction techniques predict the samples for a block using information inherited from a merge reference block, i.e., a previously-decoded block from the same picture.

In accordance with embodiments, when a block is coded using a merge-based intra prediction technique, a virtual BV is constructed from the current block to the merge reference block. If (*x_{merge},y_{merge}*) and (*x_{ref},y_{ref}*) are the coordinates of corresponding positions in the block coded using a merge-based intra mode and the merge reference block, then the virtual BV is defined as $\left(\begin{matrix}{x}_{virt BV} \\ {y}_{virt BV}\end{matrix}\right) : = \left(\begin{matrix}{x}_{ref} - {x}_{block} \\ {y}_{ref} - {y}_{block}\end{matrix}\right)$

In accordance with embodiments, a block may have multiple associated virtual BVs. For example, in the case of a block coded using a merge-based prediction method which has multiple candidates for the merge reference block or merge reference block candidates, such as CCP merge and EIP merge, the virtual BV derived from each of these candidates may be used. This may also include candidates which are implicitly eliminated, such as in TIMD-merge. For example, TIMD-merge constructs a list of up to five candidates. The template cost is calculated for each of these candidates. The candidate with the lowest cost is then selected and used. In accordance with embodiments, the four merge reference block candidates which are not used directly in a TIMD-merge prediction may still have a virtual BVs derived for them. Alternatively, only the virtual BV derived from a chosen merge reference block may be used.

In accordance with embodiments, Another situation which may lead to the derivation of multiple virtual BVs is that the current block and the merge reference block have different sizes. In such a situation, different virtual BVs are derived depending on the reference position chosen from the current block. For example, one may derive five virtual BVs using the center of the block and each corner of the block: $\left(\begin{matrix}{x}_{virt BV , Ctr} \\ {y}_{virt BV , Ctr}\end{matrix}\right) : = \left(\begin{matrix}{x}_{ref , Ctr} - {x}_{block , Ctr} \\ {y}_{ref , Ctr} - {y}_{block , Ctr}\end{matrix}\right)$ $\left(\begin{matrix}{x}_{virt BV , TL} \\ {y}_{virt BV , TL}\end{matrix}\right) : = \left(\begin{matrix}{x}_{ref , TL} - {x}_{block , TL} \\ {y}_{ref , TL} - {y}_{block , TL}\end{matrix}\right) .$ $\left(\begin{matrix}{x}_{virt BV , TR} \\ {y}_{virt BV , TR}\end{matrix}\right) : = \left(\begin{matrix}{x}_{ref , TR} - {x}_{block , TR} \\ {y}_{ref , TR} - {y}_{block , TR}\end{matrix}\right)$ $\left(\begin{matrix}{x}_{virt BV , BL} \\ {y}_{virt BV , BL}\end{matrix}\right) : = \left(\begin{matrix}{x}_{ref , BL} - {x}_{block , BL} \\ {y}_{ref , BL} - {y}_{block , BL}\end{matrix}\right)$ $\left(\begin{matrix}{x}_{virt BV , BR} \\ {y}_{virt BV , BR}\end{matrix}\right) : = \left(\begin{matrix}{x}_{ref , BR} - {x}_{block , BR} \\ {y}_{ref , BR} - {y}_{block , BR}\end{matrix}\right)$

In accordance with other embodiments, a single virtual BV may be derived from different-sized blocks, for example by using a fixed reference position. In accordance with other embodiments, a single virtual BV may be derived for one merge reference block candidate determined from a plurality of merge reference block candidates, e.g., by taking the virtual BV with the minimum amplitude from a set of merge reference block candidates or by taking an average of a number of BVs. Thus, when there are multiple merge reference block candidates, only a merge reference block which is chosen is used. For example, considering EIP-Merge, when a CU is coded using EIP-Merge, a list of up to 6 merge reference candidates is constructed. The merge reference candidate to be used is determined by an index which is signaled in the bitstream. In this case, one takes only the virtual BV corresponding with the merge reference block candidate which was selected according to the signaled index.

### Virtual Block Vector Usage

The coding of a block using a BV-based prediction technique often involves searching a neighborhood of the block, with the aim of collecting a set of neighborhood vectors. The neighborhood vectors are subsequently used in a variety of ways - dependent on the specifics of the vector-based prediction technique applied. The prior art finds the neighborhood vectors by searching the neighboring blocks for blocks which are themselves coded using a vector-based prediction. Embodiments of the present disclosure provide for an extension of the blocks, which may be used to collect the neighborhood vectors. Besides neighboring blocks, which are coded using BV-based prediction, the embodiments of the inventive approach collect neighborhood vectors from neighboring blocks which are coded using merge-based intra modes. In accordance with embodiment, the above *Virtual Block Vector Derivation* described is applied for the derivation of virtual BVs in order to extend the set of neighborhood vectors.

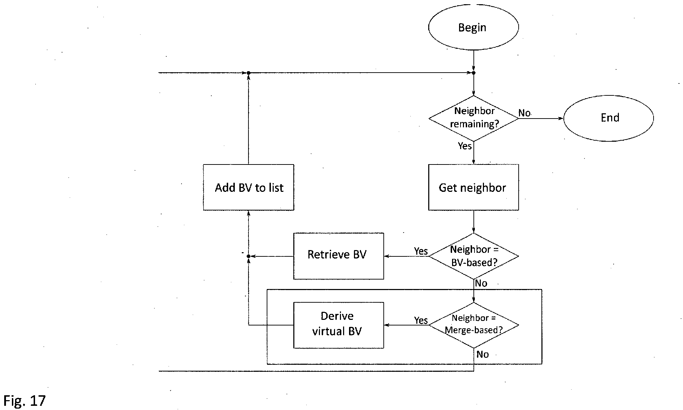

Fig. 17 illustrates a flowchart showing how a virtual BVs may be used in accordance with embodiments of the present invention. After the neighborhood search begins, the following process is repeated as long as there are any neighbors of the currently processed block remain, otherwise the process ends. The process get a neighbor and determines whether or not it is a BV-based block. If yes, the one or more BVs associated with this block are retrieved and added to the BV list. If no, the process determines whether or not it is a merge-based block. If yes, the one or more virtual BVs for this block are derived in accordance with the present disclosure and added to the BV list. If no, the process gets the next neighbor, if any.

In accordance with other embodiments, besides a neighborhood search, another scenario in which virtual BVs may be used is with BV-based prediction methods which use a history list, such as IBC and IntraTMP. These methods maintain a FIFO buffer of the N most recently used BVs throughout the encoding and decoding processes. The contents of this FIFO buffer is used alongside the BV candidates from the neighborhood. In accordance with embodiments, when a block is coded using a merge-based intra prediction method, one or more virtual BVs may be derived for it and added to the history buffer.

In accordance with embodiments, the use of the virtual BVs depends on the specifics of the BV-based prediction method applied to the currently processed block. In general, the virtual BVs may be treated identically to a neighborhood vector taken from a neighbor block coded using a BV-based prediction method. In accordance with other embodiments, the virtual BVs may be given a different treatment to neighborhood vectors, which come from neighbor blocks coded using BV-based prediction methods. For instance, when considering, for example, IntraTMP, virtual BVs may be disadvantageous in a competition stage. IntraTMP constructs a list of BV candidates from a variety of sources, evaluates the template cost of each of the candidates and then selects the lowest-cost candidate(s). If virtual BVs are included in this shortlist, the BV candidates may be disadvantaged due to multiplying their template costs by a penalty factor > 1.

### Decoding Method

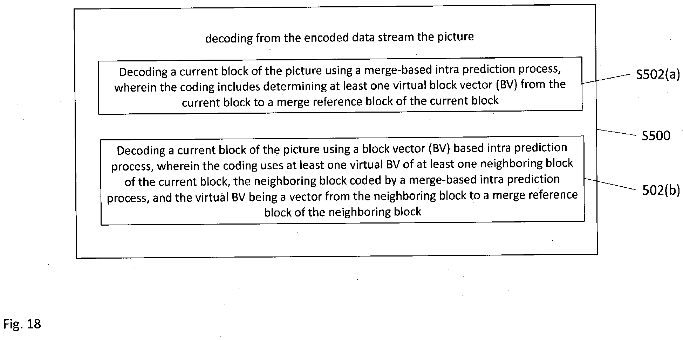

Fig. 18 illustrates a flow diagram of a method for decoding an encoded data stream, the encoded data stream including data representing a picture. The method includes the following:
S500: Decoding from the encoded data stream the picture, wherein decoding the picture comprises::
decoding S502(a) a current block of the picture using a merge-based intra prediction process, wherein the coding includes determining at least one virtual block vector (BV) from the current block to a merge reference block of the current block, or
decoding S502(b) a current block of the picture using a block vector (BV) based intra prediction process, wherein the coding uses at least one virtual BV of at least one neighboring block of the current block, the neighboring block coded by a merge-based intra prediction process, and the virtual BV being a vector from the neighboring block to a merge reference block of the neighboring block.

Further embodiments of decoder-side processes provide for specific implementations or realizations of the inventive approach are now described.

### TIMD-Merge virtual BVs used in IBC and IntraTMP lists

In accordance with embodiments, when a decoder encounters a block coded using TIMD-Merge, it derives a virtual BV using, e.g., the above-described process. This BV is stored in the coded block information and/or added to the BV history FIFO buffer. When the decoder encounters a block coded using IBC or IntraTMP and performs a neighborhood search, if the search tests a block which is coded using TIMD-Merge then it retrieves the virtual BV from the coded block information.

### EIP-Merge virtual BVs used in BVG-CCCM

In accordance with embodiments, an applicability of BVG-CCCM is extended to chroma blocks whose collocated luma blocks are coded using EIP-merge. If a block is coded using BVG-CCCM and a collocated luma block is coded using EIP-merge, a decoder derives a number of virtual BVs for each of the EIP-merge candidates. BVG-CCCM proceeds to derive a cross-component model using the target blocks of these virtual BVs as it does with normal BVs.

### Most probable mode BVs used in IBC and IntraTMP lists

In accordance with embodiments, when an intra block is coded using an intra prediction mode from an MPM list, the selected MPM candidate may be considered as an intra merge type of a block where the intra prediction mode may be derived using one of the spatial (adjacent or non-adjacent) neighboring blocks during the MPM list construction. In such embodiments, a virtual BV for the MPM-coded block may be derived using the location of the spatial neighboring block that the MPM candidates is constructed from. The derived virtual BV is then stored in the coded block information and/or added to the BV history buffer. When the decoder encounters a block coded using IBC or IntraTMP and performs its neighborhood search, if the search tests a block which is coded using MPM list, then it retrieves the virtual BV from the coded block information.

### Encoding Method

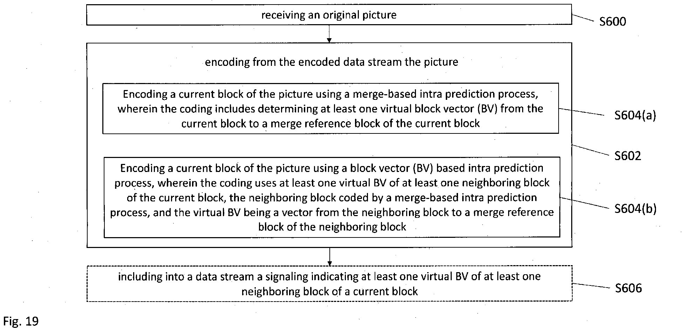

Fig. 19 illustrates a flow diagram of a method for encoding a picture into an encoded data stream. The encoded data stream includes data representing the picture and the method includes the following:

| | |
|---|---|
| S600: | Receiving an original picture. |
| S602: | Encoding the picture into the encoded data stream, wherein encoding the picture comprises |
| | encoding S604(a) a current block of the picture using a merge-based intra prediction process, wherein the coding includes determining at least one virtual block vector (BV) from the current block to a merge reference block of the current block, or |
| | encoding S604(b) a current block of the picture using a block vector (BV) based intra prediction process, wherein the coding uses at least one virtual BV of at least one neighboring block of the current block, the neighboring block coded by a merge-based intra prediction process, and the virtual BV being a vector from the neighboring block to a merge reference block of the neighboring block. |

Optionally, the method comprises including S606 into the data stream or bitstream a signaling indicating at least one virtual BV of at least one neighboring block of a current block.

### Further embodiments

So far, the inventive concept has been described with reference to aspects and embodiments concerning methods of processing one or more blocks of a picture, e.g., for decoding and/or for encoding. In accordance with further embodiments, the present disclosure also provides an apparatus of processing one or more blocks of a picture as encoders/decoders including such an apparatus.

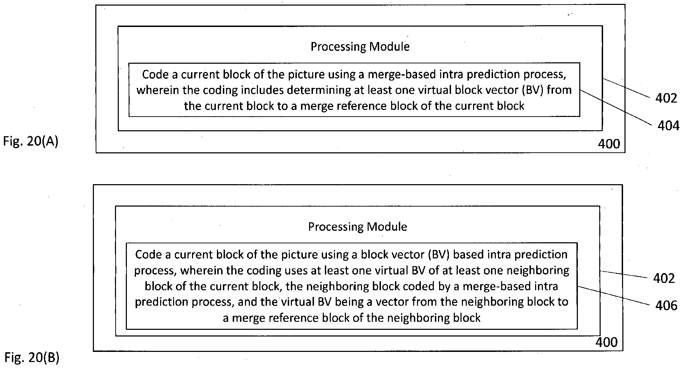

Fig. 20(A) illustrates a block diagram of an apparatus 400 of predicting one or more blocks of a picture in accordance with embodiments of the present disclosure. The apparatus 400 includes a processing module 402. The processing module 402 is configured to code 404 a current block of the picture using a merge-based intra prediction process, wherein the coding includes determining at least one virtual block vector (BV) from the current block to a merge reference block of the current block.

Fig. 20(B) illustrates a block diagram of an apparatus 400 of predicting one or more blocks of a picture in accordance with further embodiments of the present disclosure. The apparatus 400 includes a processing module 402. The processing module 402 is configured to code 406 a current block of the picture using a block vector (BV) based intra prediction process, wherein the coding uses at least one virtual BV of at least one neighboring block of the current block, the neighboring block coded by a merge-based intra prediction process, and the virtual BV being a vector from the neighboring block to a merge reference block of the neighboring block.

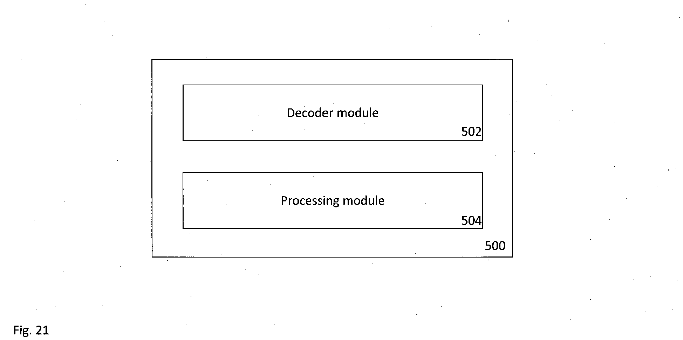

Fig. 21 illustrates a block diagram of a decoder for decoding an encoded data stream in accordance with embodiments of the present disclosure. The encoded data stream includes data representing a picture. The decoder 500 includes the following modules:

| | |
|---|---|
| 502: | A decoder module configured to decode from the encoded data stream the picture. |
| 504: | A processing module, e.g., a prediction module 170 as depicted in Fig. 2. The processing module 502 is configured to operate in accordance with embodiments of the present disclosure. For example, the processing module 502 includes an apparatus as described with reference to Fig. 20(A) of Fig. 20(B). |

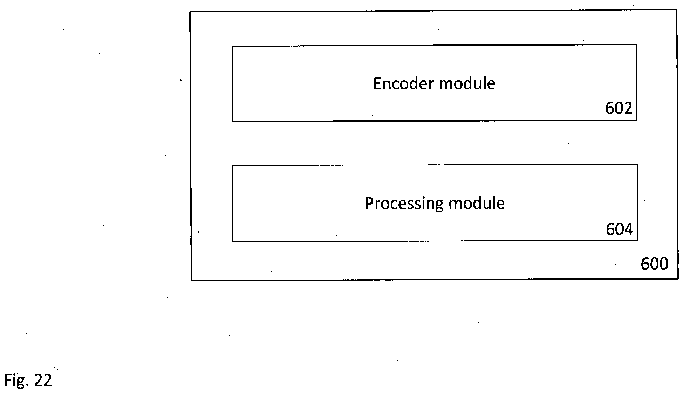

Fig. 22 illustrates a block diagram of an encoder for encoding a picture into an encoded data stream in accordance with embodiments of the present disclosure. The encoded data stream includes data representing the picture. The encoder 600 includes the following modules:

| | |
|---|---|
| 602: | An encoder module configured to receive the original picture and to encode the picture into the encoded data stream. |
| 604: | A processing module, e.g., a prediction module 124 as depicted in Fig. 1. The processing module 602 is configured to operate in accordance with embodiments of the present disclosure. For example, the processing module 502 includes an apparatus as described with reference to Fig. 20(A) of Fig. 20(B). |

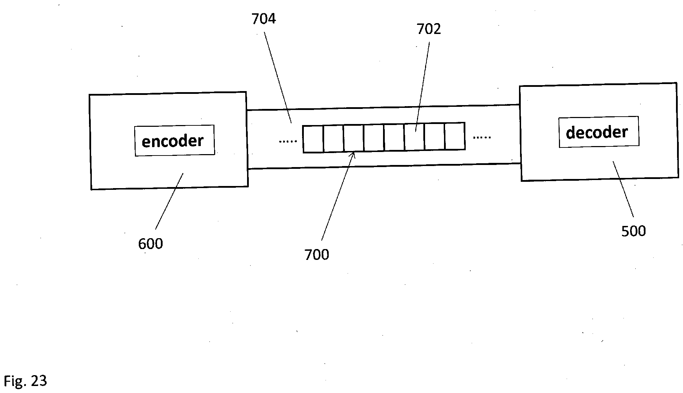

Fig. 23 illustrates a data stream 700 in accordance with embodiments of the present disclosure, which has encoded thereinto a picture and information data associated with the picture. For example, the data stream or bitstream 700 may be provided by an encoder 600 that performs the inventive method when encoding the picture into the data stream 700. The data stream 700 is transmitted to a decoder 500 via a wired or wireless transmission medium 702, like cable or a radio link, and the decoder 500 decodes from the data stream 700 the picture. The data stream includes a signaling 704 indicating, for coding a block of the picture at least one virtual BV of at least one neighboring block of the current block, the neighboring block coded by a merge-based intra prediction process, and the virtual BV being a vector from the neighboring block to a merge reference block of the neighboring block.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

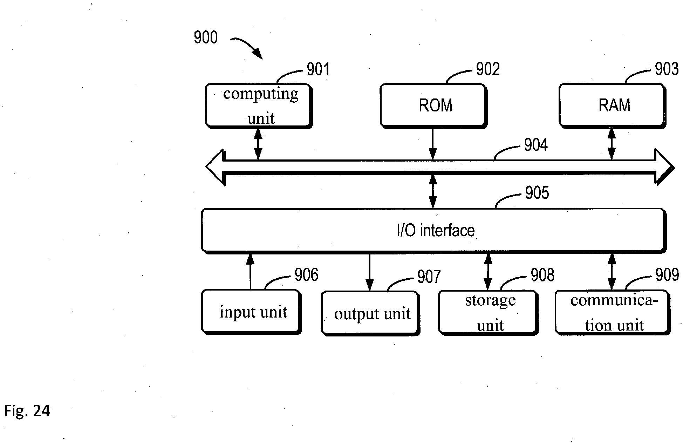

Fig. 24 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 may also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code may be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user may provide an input to the computer. Other types of devices may also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e:g., as a data server), or a computing system that includes middleware components (e.g., an application server), or a computing system that includes front-end components (e.g., a user computer with a graphical user interface or web browser through which a user may interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure may be achieved, and no limitation is imposed herein.

Further embodiments are now described:
A 1^{st} embodiment provides a method of coding one or more blocks of a picture, the method comprising:
   coding a current block of the picture using a merge-based intra prediction process, wherein the coding includes determining at least one virtual block vector (BV) from the current block to a merge reference block of the current block, or
   coding a current block of the picture using a block vector (BV) based intra prediction process, wherein the coding uses at least one virtual BV of at least one neighboring block of the current block, the neighboring block coded by a merge-based intra prediction process, and the virtual BV being a vector from the neighboring block to a merge reference block of the neighboring block.
A 2^{nd} embodiment provides the method of the 1^{st} embodiment, wherein
   the current block and/or the neighboring block coded using a merge-based intra prediction process is a merge-based block,
   the merge-based intra prediction process predicts samples for the merge-based block using information inherited from the merge reference block, the merge reference block being a previously-decoded block of the picture, and
   the at least one virtual BV is obtained from a difference between a position of the merge-based block and the merge reference block, e.g. by constructing at least one virtual BV using the coordinates of corresponding positions in the merge-based block and the merge reference block.
A 3^{rd} embodiment provides the method of the 1^{st} or 2^{nd} embodiment, wherein one virtual BV is determined, when
   - the merge-based block and the merge reference block have the same size, and/or
   - the merge-based block has one merge reference block candidate.
A 4^{th} embodiment provides the method of the 3^{rd} embodiment, wherein the virtual BV is obtained as follows: $\left(\begin{matrix}{x}_{virt BV} \\ {y}_{virt BV}\end{matrix}\right) : = \left(\begin{matrix}{x}_{ref} - {x}_{block} \\ {y}_{ref} - {y}_{block}\end{matrix}\right)$ where (*x_{block},y_{block}*) and (*x_{ref},y_{ref}*) are coordinates of corresponding positions in the merge-based block and in the merge reference block.
A 5^{th} embodiment provides the method of the 1^{st} or 2^{nd} embodiment, wherein one virtual BV is determined for
   - a predefined reference position of the merge-based block, which has a size different from the merge reference block, and/or
   - one merge reference block candidate determined from a plurality of merge reference block candidates.
A 6^{th} embodiment provides the method of the 5^{th} embodiment, wherein the one merge reference block candidate is determined by an index, which is signaled in a data stream.
A 7^{th} embodiment provides the method of the 5^{th} or 6^{th} embodiment, wherein the one virtual BV is
   - a virtual BV having a minimum amplitude among a plurality of virtual BVs for different reference positions in the merge-based block or for different merge reference block candidates, or
   - an average of a plurality of virtual BVs for different reference positions in the merge-based block or for different merge reference block candidates.
An 8^{th} embodiment provides the method of the 1^{st} or 2^{nd} embodiment, wherein two or more virtual BVs are determined, when
   - the merge-based block and the merge reference block are of different size, wherein two or more different virtual BVs are determined for two or more different reference positions in the merge-based block, and/or
   - the merge-based block has two or more merge reference block candidates, wherein a virtual BV is determined for each of the merge reference block candidates.
A 9^{th} embodiment provides the method of any one of the 1^{st} to 3^{rd} embodiments, wherein the merge reference block candidates include candidates which are implicitly eliminated or not used by the merge-based intra prediction process, e.g., a template-based intra mode derivation (TIMD) merge process.
A 10^{th} embodiment provides the method of the 8^{th} embodiment, wherein the different reference positions include a center of the merge-based block and each corner of the merge-based block, like a center (Ctr) pixel, a top left (TL) pixel, a top right (TR) pixel, a bottom left (BL) pixel and a bottom right (BR) pixel of the merge-based block, and the virtual BVs for the center of the merge-based block and each corner of the merge-based block are obtained as follows: $\left(\begin{matrix}{x}_{virt BV , Ctr} \\ {y}_{virt BV , Ctr}\end{matrix}\right) : = \left(\begin{matrix}{x}_{ref , Ctr} - {x}_{block , Ctr} \\ {y}_{ref , Ctr} - {y}_{block , Ctr}\end{matrix}\right)$ $\left(\begin{matrix}{x}_{virt BV , TL} \\ {y}_{virt BV , TL}\end{matrix}\right) : = \left(\begin{matrix}{x}_{ref , TL} - {x}_{block , TL} \\ {y}_{ref , TL} - {y}_{block , TL}\end{matrix}\right)$ $\left(\begin{matrix}{x}_{virt BV , TR} \\ {y}_{virt BV , TR}\end{matrix}\right) : = \left(\begin{matrix}{x}_{ref , TR} - {x}_{block , TR} \\ {y}_{ref , TR} - {y}_{block , TR}\end{matrix}\right)$ $\left(\begin{matrix}{x}_{virt BV , BL} \\ {y}_{virt BV , BL}\end{matrix}\right) : = \left(\begin{matrix}{x}_{ref , BL} - {x}_{block , BL} \\ {y}_{ref , BL} - {y}_{block , BL}\end{matrix}\right)$ $\left(\begin{matrix}{x}_{virt BV , BR} \\ {y}_{virt BV , BR}\end{matrix}\right) : = \left(\begin{matrix}{x}_{ref , BR} - {x}_{block , BR} \\ {y}_{ref , BR} - {y}_{block , BR}\end{matrix}\right)$ where
   - (*x_{block,Ctr},y_{block,Ctr}*) and (*x_{ref,Ctr},y_{ref,Ctr}*) are coordinates of corresponding center positions in the merge-based block and in the merge reference block,
   - (*x_{block,TL},y_{block,TL}*) and (*x_{ref,TL},y_{ref,TL}*) are coordinates of corresponding top left positions in the merge-based block and in the merge reference block,
   - (*x_{block,TR,}y_{block,TR}*) and (*x_{ref,TR,}y_{ref,TR}*) are coordinates of corresponding top right positions in the merge-based block and in the merge reference block,
   - (*x_{block,BL},Y_{block,BL}*) and (*x_{ref,BL},Y_{ref,BL}*) are coordinates of corresponding bottom left positions in the merge-based block and in the merge reference block,
   - (*x_{block,BR},y_{block,BR}*) and (*x_{ref,BR},y_{ref,BR}*) are coordinates of corresponding bottom right positions in the merge-based block and in the merge reference block,
An 11^{th} embodiment provides the method of any one of the preceding embodiments, wherein, when coding the current block using the merge-based intra prediction process, the at least one virtual BVs is added to coded block information and/or a list of BVs, like a history buffer, e.g., for use for a history-based BV derivation.
A 12^{th} embodiment provides the method of any one of the preceding embodiments, wherein the at least one virtual BV is used for coding
   - the current block in a different channel, e.g., a co-located chroma block, or
   - one or more subsequent blocks in a currently processed picture or frame, or
   - one or more blocks in a different picture or frame, e.g., one more pictures or frames following the currently processed picture or frame.
A 13^{th} embodiment provides the method of the 12^{th} embodiment, wherein the one or more subsequent blocks of the currently processed picture or frame or the blocks in the different picture or frame are coded using a BV-based intra prediction process, which uses the at least one virtual BV.
A 14^{th} embodiment provides the method of any one of the preceding embodiments, wherein the one or more virtual BVs to be used by the BV-based intra prediction process are
   - determined from the one or more neighboring blocks, which are coded using a merge-based intra prediction process, and/or
   - obtained from a list of BVs.
A 15^{th} embodiment provides the method of the 14^{th} embodiment, wherein the list of BVs, e.g., a first-in-first-out (FIFO) buffer, holds the N most recently BVs used for the coding process.
A 16^{th} embodiment provides the method of the 14^{th} embodiment, wherein, for coding the current block using the BV-based intra prediction process, a neighborhood of the current block is searched for locating BVs for the BV-based intra prediction process, and, in case a neighboring block is encountered, which is coded using a merge-based intra prediction process, one or more the virtual BVs are used for the BV-based intra prediction process.
A 17^{th} embodiment provides the method of any one of the preceding embodiments, wherein coding the current block using the BV-based intra prediction process uses, in addition to the virtual BV, at least one BV of at least one neighboring block, which is coded using the BV-based intra prediction process.
An 18^{th} embodiment provides the method of any one of the preceding embodiments, wherein a virtual BV is treated identically to a BV obtained from a neighboring block coded using a BV-based prediction process.
A 19^{th} embodiment provides the method of any one the 1^{st} to 17^{th} embodiments, wherein a virtual BV is treated differently from a BV obtained from a neighboring block coded using a BV-based prediction process, e.g., by multiplying cost of a virtual BV by a penalty factor in a competition stage building a list of BV candidates.
A 20^{th} embodiment provides the method of any one of the preceding embodiments, wherein coding the blocks of a picture comprises decoding the blocks as follows:
   - when decoding a block coded using a merge-based intra prediction process,
      ∘ a virtual BV is derived, and
      ∘ the virtual BV is stored in coded block information and/or added to a list of BVs, like a history buffer,
   - when decoding a block coded using a BV-based intra prediction process,
      ∘ a neighborhood search is performed,
      ∘ in case the neighborhood search reveals a block which is coded using the merge-based intra prediction process, the virtual BV is retrieved from the coded block information or from the list of BVs, and
      ∘ the block is decoded using the BV-based intra prediction process and the retrieved virtual BV.
A 21^{st} embodiment provides the method of any one of the 1^{st} to 19^{th} embodiments, wherein coding the blocks of a picture comprises decoding the blocks as follows:
   - when decoding a block coded by a BV-based intra prediction process using a cross-component model, and when a collocated luma block is coded using a merge-based intra prediction process,
      ∘ a virtual BV is derived for each of a plurality of merge reference block candidates for the merge-based intra prediction process, and
      ∘ the block is decoded by the BV-based intra prediction process using a cross-component model derived using the merge reference blocks of the virtual BVs.
A 22^{nd} embodiment provides the method of any one of the preceding embodiments, wherein the merge-based intra prediction process comprises one or more of the following:
   - a template-based intra mode derivation (TIMD) merge process,
   - a cross-component prediction (CCP)-merge process,
   - an extrapolation-based intra prediction (EIP) merge process,
   - a process using an intra prediction mode from a most probable mode (MPM) list, wherein a virtual BV for the block is derived using a location of a spatial neighboring block from with MPM candidates in the MPM list are constructed.
A 23^{rd} embodiment provides the method of any one of the preceding embodiments, wherein the BV-based intra prediction process comprises one or more of the following:
   - an intra block copy (IBC),
   - an and Intra template matching (IntraTMP) process,
   - a direct block vector process.
   - a block vector-guided convolutional cross-component model (BVG-CCCM) process.
A 24^{th} embodiment provides a method for decoding a data stream, the data stream including data representing a picture, the method comprising:
   decoding from the data stream the picture,
   wherein decoding the picture comprises coding one or more blocks of a picture according to any one the 1^{st} to 23^{rd} embodiments.
A 25^{th} embodiment provides a method for encoding a picture into a data stream, the data stream including data representing the picture, the method comprising:
   receiving an original picture, and
   encoding the picture into the data stream,
   wherein encoding the picture comprises coding one or more blocks of a picture according to any one of the 1^{st} to 19^{th} embodiments.
A 26^{th} embodiment provides a non-transitory computer-readable storage medium comprising instructions which, when executed by a computer, cause the computer to carry out the method of any one of the preceding embodiments.
A 27^{th} embodiment provides an apparatus of coding one or more blocks of a picture, the apparatus comprising:
   a processing module, wherein the processing module is configured to code
   - a current block of the picture using a merge-based intra prediction process, wherein the coding includes determining at least one virtual block vector (BV) from the current block to a merge reference block of the current block, or
   - a current block of the picture using a block vector (BV) based intra prediction process, wherein the coding uses at least one virtual BV of at least one neighboring block of the current block, the neighboring block coded by a merge-based intra prediction process, and the virtual BV being a vector from the neighboring block to a merge reference block of the neighboring block.
A 28^{th} embodiment provides an apparatus for decoding a data stream, the data stream including data representing a picture, the apparatus comprising:
   a decoder module configured to decode from the data stream the picture, and
   an apparatus according to the 27^{th} embodiment.
A 29^{th} embodiment provides an apparatus for encoding a picture into a data stream, the data stream including data representing the picture, the apparatus comprising:
   an encoder module configured to receive the original picture and to encode the picture into the data stream, and
   an apparatus according to the 27^{th} embodiment.
A 30^{th} embodiment provides a data stream having encoded thereinto a picture, wherein the data stream comprises:
   a signaling indicating, for a coding one or more blocks of a picture, at least one virtual block vector (BV) of at least one neighboring block of a current block, the neighboring block coded by a merge-based intra prediction process, and the virtual BV being a vector from the neighboring block to a merge reference block of the neighboring block.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

### References

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http://aomedia.org/av1/specification/
[5] Algorithm description for Versatile Video Coding and Test Model 11 (VTM 11), https://jvet-experts.org/doc_end_user/current_document.php?id=10541
[6] Algorithm description of Enhanced Compression Model 12 (ECM 12), https://jvet-experts.org/doc_end_user/current_document.php?id=13915

## Claims

1. A method of coding one or more blocks of a picture, the method comprising:
coding a current block of the picture using a merge-based intra prediction process, wherein the coding includes determining at least one virtual block vector (BV) from the current block to a merge reference block of the current block, or
coding a current block of the picture using a block vector (BV) based intra prediction process, wherein the coding uses at least one virtual BV of at least one neighboring block of the current block, the neighboring block coded by a merge-based intra prediction process, and the virtual BV being a vector from the neighboring block to a merge reference block of the neighboring block.

2. The method of claim 1, wherein
the current block and/or the neighboring block coded using a merge-based intra prediction process is a merge-based block,
the merge-based intra prediction process predicts samples for the merge-based block using information inherited from the merge reference block, the merge reference block being a previously-decoded block of the picture, and
the at least one virtual BV is obtained from a difference between a position of the merge-based block and the merge reference block, e.g. by constructing at least one virtual BV using the coordinates of corresponding positions in the current block and the merge reference block.

3. The method of claim 1 or 2, wherein one virtual BV is determined, when
- the merge-based block and the merge reference block have the same size, and/or
- the merge-based block has one merge reference block candidate.

4. The method of claim 1 or 2, wherein one virtual BV is determined for
- a predefined reference position of the merge-based block, which has a size different from the merge reference block, and/or
- one merge reference block candidate determined from a plurality of merge reference block candidates.

5. The method of claim 4, wherein the one virtual BV is
- a virtual BV having a minimum amplitude among a plurality of virtual BVs for different reference positions in the merge-based block or for different merge reference block candidates, or
- an average of a plurality of virtual BVs for different reference positions in the merge-based block or for different merge reference block candidates.

6. The method of claim 1 or 2, wherein two or more virtual BVs are determined, when
- the merge-based block and the merge reference block are of different size, wherein two or more different virtual BVs are determined for two or more different reference positions in the merge-based block, and/or
- the merge-based block has two or more merge reference block candidates, wherein a virtual BV is determined for each of the merge reference block candidates.

7. The method of any one of the preceding claims, wherein, when coding the current block using the merge-based intra prediction process, the at least one virtual BVs is added to coded block information and/or a list of BVs, like a history buffer, e.g., for use for a history-based BV derivation.

8. The method of any one of the preceding claims, wherein the at least one virtual BV is used for coding
- the current block in a different channel, e.g., a co-located chroma block, or
- one or more subsequent blocks in a currently processed picture or frame, or
- one or more blocks in a different picture or frame, e.g., one more pictures or frames following the currently processed picture or frame.

9. The method of any one of the preceding claims, wherein the one or more virtual BVs to be used by the BV-based intra prediction process are
- determined from the one or more neighboring blocks, which are coded using a merge-based intra prediction process, and/or
- obtained from a list of BVs.

10. The method of claim 9, wherein the list of BVs, e.g., a first-in-first-out (FIFO) buffer, holds the N most recently BVs used for the coding process.

11. The method of claim 9 or 10, wherein, for coding the current block using the BV-based intra prediction process, a neighborhood of the current block is searched for locating BVs for the BV-based intra prediction process, and, in case a neighboring block is encountered, which is coded using a merge-based intra prediction process, one or more the virtual BVs are used for the BV-based intra prediction process.

12. The method of any one of the preceding claims, wherein coding the blocks of a picture comprises decoding the blocks as follows:
- when decoding a block coded using a merge-based intra prediction process,
∘ a virtual BV is derived, and
∘ the virtual BV is stored in coded block information and/or added to a list of BVs, like a history buffer,
- when decoding a block coded using a BV-based intra prediction process,
∘ a neighborhood search is performed,
∘ in case the neighborhood search reveals a block which is coded using the merge-based intra prediction process, the virtual BV is retrieved from the coded block information or from the list of BVs, and
∘ the block is decoded using the BV-based intra prediction process and the retrieved virtual BV.

13. The method of any one of claims 1 to 11, wherein coding the blocks of a picture comprises decoding the blocks as follows:
- when decoding a block coded by a BV-based intra prediction process using a cross-component model, and when a collocated luma block is coded using a merge-based intra prediction process,
∘ a virtual BV is derived for each of a plurality of merge reference block candidates for the merge-based intra prediction process, and
∘ the block is decoded by the BV-based intra prediction process using a cross-component model derived using the merge reference blocks of the virtual BVs.

14. A non-transitory computer-readable storage medium comprising instructions which, when executed by a computer, cause the computer to carry out the method of any one of the preceding claims.

15. An apparatus of coding one or more blocks of a picture, the apparatus comprising:
a processing module, wherein the processing module is configured to code
- a current block of the picture using a merge-based intra prediction process, wherein the coding includes determining at least one virtual block vector (BV) from the current block to a merge reference block of the current block, or
- a current block of the picture using a block vector (BV) based intra prediction process, wherein the coding uses at least one virtual BV of at least one neighboring block of the current block, the neighboring block coded by a merge-based intra prediction process, and the virtual BV being a vector from the neighboring block to a merge reference block of the neighboring block.
